# EUROPEAN PATENT SPECIFICATION

(11) **EP 2 765 283 B1**
(45) Date of publication and mention of the grant of the patent: **09.08.2017**
(21) Application number: 14150916.6
(22) Date of filing: 13.01.2014
(51) Int. Cl.: F01K 27/02, F02C 7/047, F02C 7/057, F02C 7/143, H02K 9/10, F01D 15/10, H02K 7/18, H02K 9/00

(54) **Power generating unit and method for operating such a power generating unit**
Stromerzeugungseinheit und Verfahren zum Betreiben einer Stromerzeugungseinheit
Unité de génération de puissance et procédé pour faire fonctionner une telle unité

(30) Priority: 08.02.2013 EP 13154714
(43) Date of publication of application: 13.08.2014
(73) Proprietor: Ansaldo Energia Switzerland AG, 5401 Baden (CH)
(72) Inventor: Scheu, Martin, 5400 Baden (CH); Reyser, Charly, 79790 Kuessaberg (DE)
(74) Representative: Bernotti, Andrea

(56) References cited:
- EP-A1- 2 351 915
- EP-A1- 2 369 145
- EP-A2- 2 180 165
- DE-A1-102004 050 182
- US-A- 3 796 045

## Description

### BACKGROUND OF THE INVENTION

The present invention relates to the generation of electric power by means of a gas turbine and generator. It refers to a power generating unit according to the preamble of claim 1. It further refers to a method for operating such a power generating unit.

### PRIOR ART

A generators capability (i.e. its maximum possible output) usually is reduced at hot ambient temperatures, since temperatures of the cold water entering the generator cooler increase with increasing ambient temperatures, particularly when cooling water is re-cooled in a cooling water cooler against ambient air (as opposed to water).

Usually, the reduced capability matches the reduced power output of a gas turbine, which drives the generator in a power generating unit, at higher ambient temperatures. However, when gas turbine power output is augmented with evaporative cooling or fogging, and possibly further augmented by additional water injection, the generator may not be able to convert this augmented power within its specification limits (typically isolation class E).

On the other hand, gas turbines operating at cold ambient temperatures usually need a mechanism to prevent icing of the compressor inlet and front stages.

To solve the problem related to the gas turbine power augmentation a generator with higher capability could be used: Usually this means a bigger and more expensive generator for this specific operation window. The cost increases disproportionally, if a technology change from air cooled generators to hydrogen cooled generators becomes necessary.

Alternatively, re-cooling could be provided with evaporative re-coolers outside the air intake system.

Alternatively, a mechanical chilling device (heat pump) could be used to re-cool the generator cold water.

However, above described solutions are complex and/or costly and require significant additional space.

To solve the problem related to icing of the gas turbine, bleed air from the compressor could be used with the following disadvantages: It reduces gas turbine efficiency, and requires high temperature and pressure class piping.

Alternatively, a heat exchanger may be used. Typically, low temperature steam from a water steam cycle is used for the purpose. Hence, this would be limited to combined cycle power plants (CCPP) and hence would not be feasible for simple cycle plants.

Document US 6,112,544 discloses a method for optimizing the cooling efficiency of a generator cooling system for a generator used for electric power generation in a power station. The generator has a generator cooler which is arranged, together with further coolers, in a closed intermediate cooling circuit which transfers heat to a main cooling water system via at least one intermediate cooler. The method includes providing means for increasing the mean driving temperature difference between the media flowing through the generator cooler in the intermediate cooling circuit to improve the transmission of heat from the generator cooler to the main cooling water system. The cooling system is not related to a gas turbine.

Document US 2012/0216546 A1 discloses a method and apparatus for the operation of a gas turbine unit with an evaporative intake air cooling system in the intake air pathway, wherein the return water flow of the evaporative intake air cooling system is used for the cooling of components of the gas turbine unit and/or of a generator coupled to the gas turbine unit and/or of another element coupled to the gas turbine unit, and a gas turbine unit adapted to be operated using this method. A connection between gas turbine and generator cooling is established only via the use of the return water flow.

Document WO 03/048545 A1 discloses a gas turbine unit as well as a method for operating a gas turbine with high-pressure turbine and a low-pressure turbine unit. In this unit a very quick and at the same time easily controllable augmentation or reduction of the shaft power of the gas turbine unit can be achieved by providing at least one liquid droplet injection device on the upstream side of said compressor for injecting liquid into the stream of intake air in order to increase the shaft power generated by the gas turbine unit. The amount of water mass flow corresponding to the desired increase or decrease of shaft power output of the gas turbine unit is added or reduced in the form of liquid droplets in a substantially stepless manner and immediately within a time interval that is determined by the design characteristics of the liquid droplet injection device. A relation to a generator is not disclosed.

DE 10 2004 050182 describes an air conditioning process using an air-charged heat transfer device coupled to a direct adiabatic cooling of induction air with water by means of a water transfer device.

EP 2351915 describes a combined cycle power plant with a system for preheating inlet air to a gas turbine compressor and/or for fuel preheating, where the fuel preheater comprises two or more stages.

### SUMMARY OF THE INVENTION

It is an object of the present invention to provide a power generating unit according to the preamble of claim 1, which synchronizes the power and cooling requirements of gas turbine and generator in a simple and most effective way.

It is another object of the present invention to disclose a method for operating such a power generating unit.

These and other objects are obtained by a power generating unit according to claim 1 and a method according to claim 13. The power generating unit according to the present invention comprises all features of independent claim 1, inter alia a gas turbine with an air intake section, a compressor, at least one combustor and at least one turbine, and further comprises a gas-cooled generator, being driven by said gas turbine and having a generator cooling system comprising at least one cooler, through which cooling water flows during operation, and which removes heat from said generator during operation. The at least one cooler is suitable for having cooling water flowing through it. In said unit said generator cooling system is connected to an air intake heat exchanger arranged within said air intake section of said gas turbine in order to transfer heat from said cooling water flowing through said generator cooling system, to the air flowing through said air intake section.

According to an embodiment of the invention said air intake section of said gas turbine comprises a filter at the entrance of said air intake section, and said air intake heat exchanger is arranged downstream of said filter.

Specifically, said air intake section of said gas turbine comprises a silencer downstream of said filter, and said air intake heat exchanger is arranged downstream of said silencer.

More specifically, said air intake section of said gas turbine comprises means for cooling intake air flowing through said air intake section, and said cooling means is arranged between said filter and said silencer.

Even more specifically, said cooling means comprises a droplet injection device for fogging.

Alternatively, said cooling means comprises an evaporative cooler, preferably with a droplet catcher arranged downstream said evaporative cooler.

According to another embodiment of the invention said air intake section of said gas turbine comprises a silencer downstream of said filter, said air intake section of said gas turbine further comprises means for cooling intake air flowing through said air intake section, which cooling means is arranged between said filter and said silencer, and said air intake heat exchanger is arranged downstream of said cooling means. In particular the said air intake heat exchanger can be arranged between said cooling means and said silencer.

Specifically, said cooling means comprises a droplet injection device for fogging.

Alternatively, said cooling means comprises an evaporative cooler, preferably with a droplet catcher arranged downstream said evaporative cooler.

According to the invention said generator cooling system comprises a generator cooler and a lube oil cooler, which are connected to a cooling water cooler, and connecting means are provided for selectively connecting said air intake heat exchanger in series with said generator cooler such that cold water flowing to the generator cooler is further cooled by routing it through said intake heat exchanger, or in parallel to said cooling water cooler in order to prevent icing of the compressor inlet and/or front stages of said gas turbine.

Specifically, a first valve is arranged in a feed line of said generator cooler, said air intake heat exchanger is connected with a first feed line to said feed line of said generator cooler upstream of said first valve, and with a first return line to said feed line of said generator cooler downstream of said first valve, and a second and third valve are arranged in said first feed line and first return line.

More specifically, said air intake heat exchanger is connected with a second feed line to a common return line of said generator cooler and said lube oil cooler, and with a second return line to a common feed line of said generator cooler and said lube oil cooler, and a fourth and fifth valve are arranged in said second feed line and second return line.

Even more specifically, a sixth valve is arranged in said common return line or common feed line between said air intake heat exchanger and said cooling water cooler.

The method for operating an inventive power generating unit according to the invention is defined by independent claim 13 and comprises that heat is transferred from said generator cooling system to intake air flowing through said air intake section of said gas turbine by means of said air intake heat exchanger.

According to an embodiment of the inventive method said at least one cooler is a generator cooler, and cold water flowing to said generator cooler is further cooled by routing it through said air intake heat exchanger arranged within said air intake section of said gas turbine to inherently synchronize an additional cooling demand with a higher output of said gas turbine when air inlet cooling is activated. According to another embodiment of the inventive method said air intake heat exchanger is used at low ambient temperature to act as an efficient anti-icing means.

According to a further embodiment of the inventive method said air intake heat exchanger is used for intake air pre-heating in order to control NOx emission of said gas turbine.

### BRIEF DESCRIPTION OF THE DRAWINGS

The present invention is now to be explained more closely by means of different embodiments and with reference to the attached drawings.
- Fig. 1: shows a basic scheme of a power generating unit with a gas turbine with sequential combustion and a generator driven by said gas turbine, and having a generator cooling system (solid lines), which is, according to the invention, connected to a heat exchanger placed in an air intake section of said gas turbine (broken lines);
- Fig. 2: shows an example of a basic generator cooling system with a generator cooler and a lube oil cooler;
- Fig. 3: shows the generator cooling system of Fig. 2 completed with an air intake heat exchanger according to the invention;
- Fig. 4: shows the generator cooling system of Fig. 3 completed with selectable connecting means in a first mode of operation according to the invention;
- Fig. 5: shows the generator cooling system of Fig. 4 in a second mode of operation according to the invention;
- Fig. 6: shows a gas turbine scheme with an air intake section and air intake heat exchanger according to an embodiment of the invention; and
- Fig. 7: shows a gas turbine scheme with an air intake section and air intake heat exchanger according to another embodiment of the invention.

### DETAILED DESCRIPTION OF DIFFERENT EMBODIMENTS OF THE INVENTION

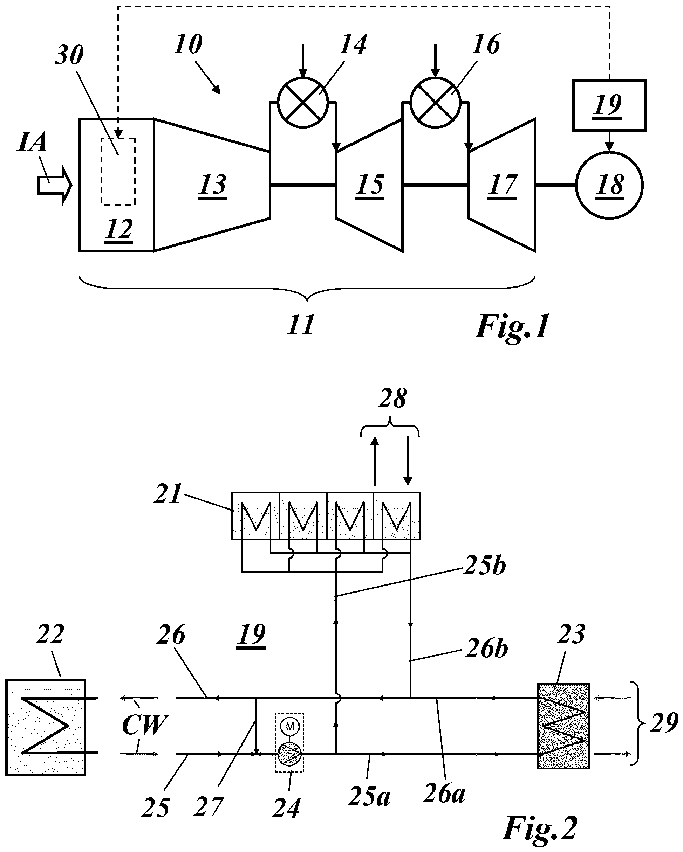

Fig. 1 shows a basic scheme of a power generating unit with a gas turbine with sequential combustion and a generator driven by said gas turbine, and having a generator cooling system (solid lines), which is, according to the invention, connected to a heat exchanger placed in an air intake section of said gas turbine (broken lines).

The power generating unit 10 of Fig. 1 comprises a gas turbine 11 with an air intake section 12, a compressor 13, a first combustor 14, a first (high pressure) turbine 15, a second combustor 16, a second (low pressure) turbine 17 and a gas (air)-cooled generator 18, which is driven by gas turbine 11 and has a generator cooling system 19. Generator cooling system 19 is now connected to an air intake heat exchanger 30 arranged within air intake section 12 of gas turbine 11 in order to transfer heat from cooling water flowing through generator cooling system 19 to the air flowing through air intake section 12 of gas turbine 11.

An exemplary configuration of generator cooling system 19 is shown in Fig. 2. It comprises a generator cooler 21 (having four parallel sub-units in this case) and a lube oil cooler 23. Generator cooler 21 is part of an air circuit 28, thereby receiving warm air (of for example 100°C) from generator 18 and delivering cool air (of for example 48°C) to the generator. The cooling air volume flow within air circuit 28 may be in the order of several m³/s. Lube oil cooler 23 is part of an oil circuit 29, thereby receiving warm oil (of for example 70°C) from the bearings of generator 18 and delivering cooled-down oil (of for example 54°C) to the generator.

Both coolers 21 and 23 are operated with cooling water CW, which is pumped by water pump 24 through feed lines 25a, and 26a and flows back through return lines 26a and 26b. Coolers 21 and 23 are connected in parallel with their cooling water sides and may be both connected to a cooling water cooler 22. In addition, a bypass line 27 may be provided upstream of water pump 24.

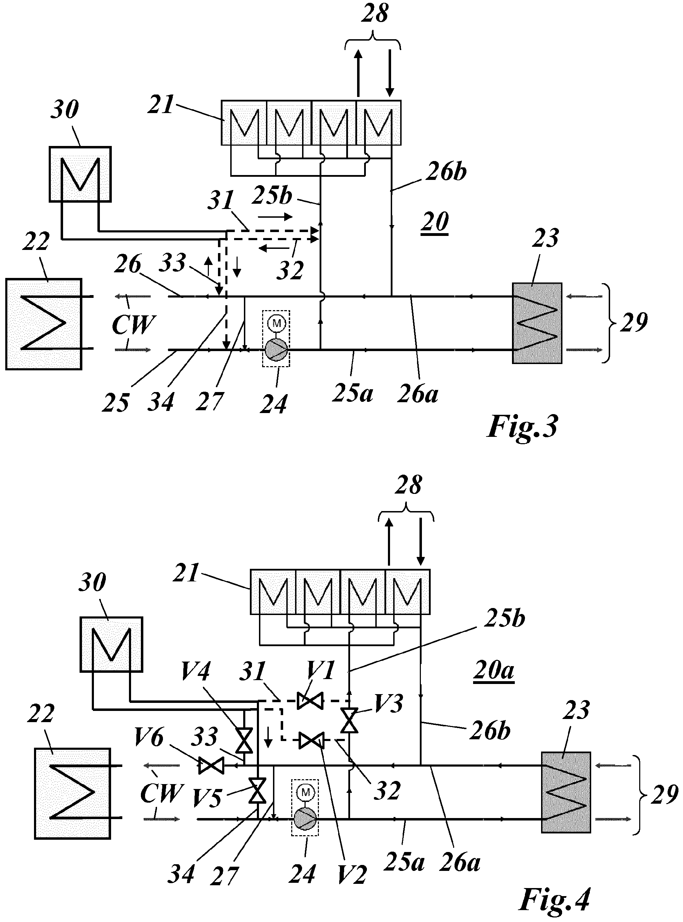

Now, according to the invention, generator cooling system 19 of Fig. 2 is connected to an air intake heat exchanger 30, resulting in modified generator cooling system 20 shown in Fig. 3. Principally, air intake heat exchanger 30 is connected to the generator cooler part of generator cooling system 20 by means of a first feed line 32 and a first return line 31, and to the parallel circuit of both coolers 21 and 23 by means of a second feed line 33 and a second return line 34.

Two cases are possible for the use of air intake heat exchanger 30 in this configuration:
1. Generator and lube oil waste heat are used to prevent icing without sacrificing gas turbine performance. In this case, the air intake heat exchanger 30 is connected by means of lines 33 and 34 to the system so that the sum of generator and lube oil waste heat can be used to heat up the intake air IA of the gas turbine.
2. Cooled-down intake air is used to further cool down the cooling water being fed to generator cooler 21. In this case, the air intake heat exchanger 30 is looped into feed line 25b of generator cooler 21 by means of lines 31 and 32 so that generator cooler 21 receives cooling water, the temperature of which is reduced parallel to the reduction in intake air temperature.

Thus, the same heat exchanging device 30 and medium can be used for both purposes.

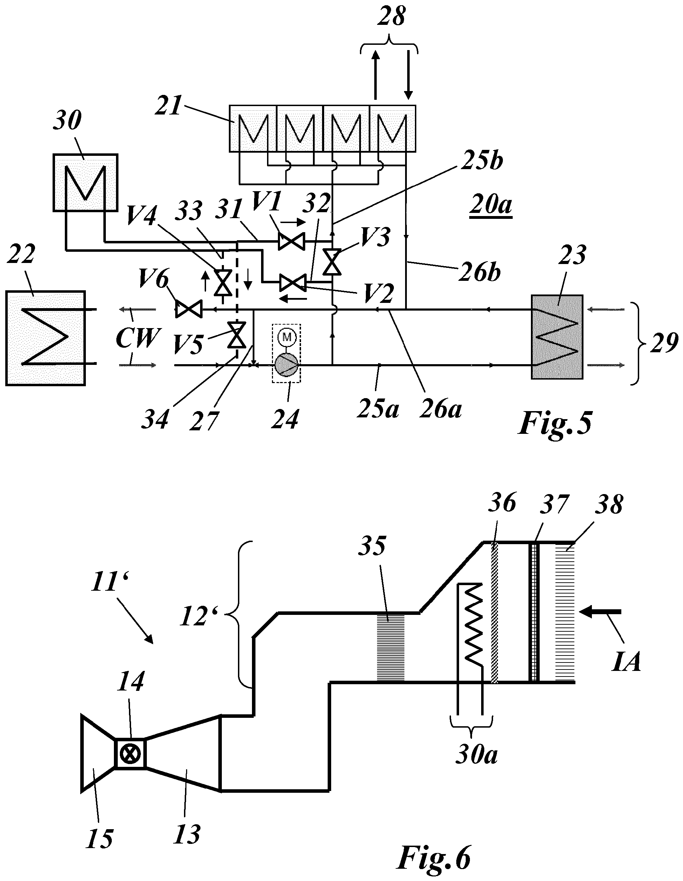

In order to be able to select one of these two operating modes, several valves V1-V6 are arranged in lines 25b, 31-34 and the return line to cooling water cooler 22, as shown in Fig. 4 and 5. A first valve V3 is arranged in feed line 25b of generator cooler 21. Air intake heat exchanger 30 is connected with feed line 32 to feed line 25b of generator cooler 21 upstream of first valve V3, and with return line 31 to feed line 25b of generator cooler 21 downstream of first valve V3. In this example a second and third valve V1, V2 are arranged in feed line 32 and return line 31, respectively.

On the other hand, air intake heat exchanger 30 is connected with feed line 33 to a common return line 26 of generator cooler 21 and lube oil cooler 23, and with a return line 34 to a common feed 25 line of generator cooler 21 and lube oil cooler 23. A fourth and fifth valve V4, V5 are arranged in feed line 33 and return line 34, respectively.

When the ambient temperature is low enough to cause an icing problem, valves V1 and V2 are closed, and valves V4 and V5 are opened (Fig. 4), so that waste heat of both coolers 21 and 23 is used to heat up the intake air at gas turbine 11 by means of air intake heat exchanger 30. Valve V6 may be closed or partly closed, depending on the required heating of the intake air IA. The air pre-heating can be used to keep the intake temperature above a minimum, for example for very low ambient temperatures in Russia, Siberia etc.. For Anti-Icing the heat released by lube oil cooler 23 and generator cooler 21 is sufficient to preheat the intake air by about 10 K.

When additional generator cooling is needed in view of a higher gas turbine output caused by augmentation procedures at air intake section 12, valves V3, V4 and V5 are closed, and valves V1 and V2 are opened (Fig. 5). Then, cold water flowing to generator cooler 21 through feed line 25b, which typically arrives at T_{ambient}+5K from the ordinary re-cooling system 22, is further cooled by routing it through heat exchanger 30 in the air inlet system, which is located behind an air inlet cooling mechanism of the gas turbine air intake system. Accordingly, the demand is inherently synchronized with higher gas turbine output when air inlet cooling is activated. At a hot dry day the generator cooling air will be cooled down by about an additional 10 K (e.g. ambient temperature = 55°C, inlet air temperature after evaporation-cooling about 42°C =>re-cooling by means of air intake heat exchanger 30 cools more than 10°C below a prior art air-water cooler used for cooling the generator cooling water).

Air intake heat exchanger 30 can be arranged in air intake section 12 at different places, depending on the configuration of air intake section 12.

Fig. 6 shows an embodiment with air intake section 12' of gas turbine 11', wherein an air intake heat exchanger 30a is placed upstream of a silencer 35 and downstream of an evaporative cooler 37 with subsequent droplet catcher 36. Furthermore, a filter 38 may be provided at the entrance of air intake duct 12'.

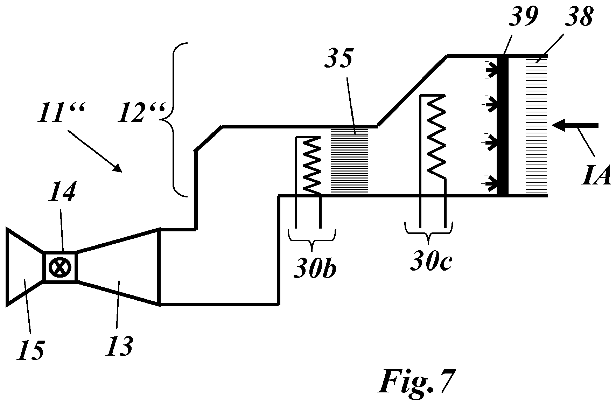

Fig. 7 shows two other embodiments with air intake section 12" of gas turbine 11", wherein either an air intake heat exchanger 30b is placed downstream of or integrated into a silencer 35, or an air intake heat exchanger 30c is placed just downstream of a droplet injection (fogging) device 39.

In general, the power generating unit according to the invention has the following features and advantages:
- The same heat exchanger is used for generator cooling purposes to address problems with power augmentation at the gas turbine and can be used at low ambient temperatures to replace less efficient anti-icing systems.
- The same heat exchanger can be used for air pre-heating at the gas turbine to control NOx emission.
- The heat exchanger for generator-recooling/intake air preheating purposes can be integrated into the silencer to minimize additional pressure loss.

### LIST OF REFERENCE NUMERALS

- 10: power generating unit
- 11,11',11": gas turbine
- 12: air intake section
- 12',12": air intake duct
- 13: compressor
- 14,16: combustor
- 15,17: turbine
- 18: generator
- 19: generator cooling system
- 20,20a: generator cooling system
- 21: generator cooler
- 22: cooling water cooler
- 23: lube oil cooler
- 24: water pump
- 25, 25a,b: feed line
- 26, 26a,b: return line
- 27: bypass line
- 28: air circuit
- 29: oil circuit
- 30, 30a-c: air intake heat exchanger
- 31,34: return line
- 32,33: feed line
- 35: silencer
- 36: droplet catcher
- 37: evaporative cooler
- 38: filter
- 39: droplet injection device (fogging)
- CW: cooling water
- IA: intake air
- V1-V7: valve

## Claims

1. Power generating unit (10), comprising a gas turbine (11, 11', 11") with an air intake section (12, 12', 12"), a compressor (13), at least one combustor (14, 16) and at least one turbine (15, 17), and further comprising a gas-cooled generator (18), being driven by said gas turbine (11, 11', 11") and having a generator cooling system (20, 20a) comprising at least one cooler (21, 23) which is suitable for having cooling water (CW) flowing through it, and which removes heat from said generator, wherein said generator cooling system (20, 20a) is connected to an air intake heat exchanger (30, 30a-c) arranged within said air intake section (12, 12', 12") of said gas turbine (11, 11', 11") in order to transfer heat from said cooling water (CW) flowing through said generator cooling system (20, 20a), to the air flowing through said air intake section (12, 12', 12"), in which said generator cooling system (20, 20a-d) comprises a generator cooler (21) and a lube oil cooler (23), which are connected to a cooling water cooler (22), and in that connecting means (V1-V6, 31-34) are provided for selectively connecting said air intake heat exchanger (30, 30a-c) in series with said generator cooler (21) such that cold water flowing to the generator cooler (21) is further cooled by routing it through said intake heat exchanger (30, 30a-c), or in parallel to said cooling water cooler (22) in order to prevent icing of the compressor inlet and/or front stages of said gas turbine (11, 11', 11 ").

2. Power generating unit as claimed in claim 1, **characterized in that** said air intake section (12, 12', 12") of said gas turbine (11, 11', 11") comprises a filter (38) at the entrance of said air intake section (12, 12', 12"), and **in that** said air intake heat exchanger (30, 30a-c) is arranged downstream of said filter (38).

3. Power generating unit as claimed in claim 2, **characterized in that** said air intake section (12") of said gas turbine (11") comprises a silencer (35) downstream of said filter (38), and **in that** said air intake heat exchanger (30b) is arranged downstream of said silencer (35).

4. Power generating unit as claimed in claim 3, **characterized in that** said air intake section (12") of said gas turbine (11") comprises means (36, 37, 39) for cooling intake air (IA) flowing through said air intake section (12"), and **in that** said cooling means (36, 37, 39) is arranged between said filter (38) and said silencer (35).

5. Power generating unit as claimed in claim 4, **characterized in that** said cooling means (36, 37, 39) comprises a droplet injection device (39) for fogging.

6. Power generating unit as claimed in claim 4, **characterized in that** said cooling means (36, 37, 39) comprises an evaporative cooler (37), preferably with a droplet catcher (36) arranged downstream said evaporative cooler (37).

7. Power generating unit as claimed in claim 2, **characterized in that** said air intake section (12', 12") of said gas turbine (11', 11") comprises a silencer (35) downstream of said filter (38), **in that** said air intake section (12', 12") of said gas turbine (11', 11") further comprises means (36, 37, 39) for cooling intake air (IA) flowing through said air intake section (12', 12"), which cooling means (36, 37, 39) is arranged between said filter (38) and said silencer (35), and **in that** said air intake heat exchanger (30a,c) is arranged downstream of said cooling means (36, 37, 39).

8. Power generating unit as claimed in claim 7, **characterized in that** said cooling means (36, 37, 39) comprises a droplet injection device (39) for fogging.

9. Power generating unit as claimed in claim 7, **characterized in that** said cooling means (36, 37, 39) comprises an evaporative cooler (37), preferably with a droplet catcher (36) arranged downstream said evaporative cooler (37).

10. Power generating unit as claimed in claim 9, **characterized in that** a first valve (V3) is arranged in a feed line (25b) of said generator cooler (21), **in that** said air intake heat exchanger (30, 30a-c) is connected with a first feed line (32) to said feed line (25b) of said generator cooler (21) upstream of said first valve (V3), and with a first return line (31) to said feed line (25b) of said generator cooler (21) downstream of said first valve (V3), and **in that** a second and third valve (V1, V2) are arranged in said first feed line (32) and first return line (31).

11. Power generating unit as claimed in claim 10, **characterized in that** said air intake heat exchanger (30, 30a-c) is connected with a second feed line (33) to a common return line (26) of said generator cooler (21) and said lube oil cooler (23), and with a second return line (34) to a common feed line (25) of said generator cooler (21) and said lube oil cooler (23), and **in that** a fourth and fifth valve (V4, V5) are arranged in said second feed line (33) and second return line (34).

12. Power generating unit as claimed in claim 11, **characterized in that** a sixth valve (V6) is arranged in said common return line (26) or common feed line (25) between said air intake heat exchanger (30, 30a-c) and said cooling water cooler (22).

13. Method for operating a power generating unit according to claim 1, **characterized in that** heat is transferred from said generator cooling system (20, 20a) to intake air (IA) flowing through said air intake section (12, 12', 12") of said gas turbine (11, 11', 11") by means of said air intake heat exchanger (30, 30a-c).

14. Method according to claim 13, **characterized in that** said at least one cooler is a generator cooler (21), and **in that** cold water flowing to said generator cooler (21) is further cooled by routing it through said air intake heat exchanger (30, 30a-c) arranged within said air intake section (12, 12', 12") of said gas turbine (11, 11', 11") to inherently synchronize an additional cooling demand with a higher output of said gas turbine (11, 11', 11") when air inlet cooling is activated.

15. Method according to claim 13, **characterized in that** said air intake heat exchanger (30, 30a-c) is used at low ambient temperature to act as an efficient anti-icing means.

16. Method according to claim 13, **characterized in that** said air intake heat exchanger (30, 30a-c) is used for intake air pre-heating in order to control NOx emission of said gas turbine (11, 11', 11 ").

## Patentansprüche

1. Kraftwerksblock (10), bestehend aus einer Gasturbine (11, 11', 11") mit einem Luftansaugtrakt (12, 12', 12"), einem Verdichter (13), mindestens einer Brennkammer (14, 16) und mindestens einer Turbine (15, 17), und ferner bestehend aus einem gasgekühlten Stromerzeuger (18), der von besagter Gasturbine (11, 11', 11 ") angetrieben wird und über ein Stromerzeuger-Kühlsystem (20, 20a) verfügt, bestehend aus mindestens einer Kühleinheit (21, 23), die sich für durchströmendes Kühlwasser (KW) eignet und Wärme vom besagten Stromerzeuger abführt, wobei das besagte Stromerzeuger-Kühlsystem (20, 20a) an einen Lufteinlasswärmetauscher (30, 30a-c) angeschlossen ist, der sich innerhalb des besagten Luftansaugtrakts (12, 12', 12") der besagten Gasturbine (11, 11', 11") befindet und die Aufgabe hat, die Wärme aus dem besagten Kühlwasser (KW), welches das besagte Stromerzeuger-Kühlsystem (20, 20a) durchströmt, an die Luft abzuführen, welche den besagten Luftansaugtrakt (12, 12', 12") durchströmt, in dem sich das besagte Stromerzeuger-Kühlsystem (20, 20a-d) befindet, welches aus einem Stromerzeugerkühler (21) und einem Schmierölkühler (23) besteht, und welche an die Kühlwasser-Kühleinheit (22) angeschlossen ist, wobei durch diesen Anschluss Vorrichtungen (V1-V6, 31-34) vorgesehen sind, um den besagten Lufteinlasswärmetauscher (30, 30a-c) mit dem besagten Stromerzeugerkühler (21) so in Reihe zu schalten, wobei das zum Stromerzeugerkühler (21) strömende kalte Wasser weiter abgekühlt wird, indem das Wasser durch den besagten Lufteinlasswärmetauscher (30, 30a-c) geleitet wird oder parallel zur besagten Kühlwasser-Kühleinheit (22) geleitet wird, um die Vereisung der Verdichterstufeneinlässe bzw. vorgeschalteten Anlagen der besagten Gasturbine (11, 11', 11") zu verhindern.

2. Kraftwerksblock nach Anspruch 1, **dadurch gekennzeichnet, dass** der besagte Luftansaugtrakt (12, 12', 12") der besagten Gasturbine (11, 11', 11") einen Filter (38) am Einlass des besagten Luftansaugtrakts (12, 12', 12 ") umfasst, und der besagte Lufteinlasswärmetauscher (30, 30a-c) dem besagten Filter (38) nachgeschaltet ist.

3. Kraftwerksblock nach Anspruch 2, **dadurch gekennzeichnet, dass** der besagte Luftansaugtrakt (12") der besagten Gasturbine (11") einen Schalldämpfer (35) umfasst, der dem besagten Filter (35) nachgeschaltet ist, und der besagte Lufteinlasswärmetauscher (30b) dem besagten Schalldämpfer (35) nachgeschaltet ist.

4. Kraftwerksblock nach Anspruch 3, **dadurch gekennzeichnet, dass** der besagte Luftansaugtrakt (12") der besagten Gasturbine (11") über Vorrichtungen (36, 37, 39) zur Kühlung der Ansaugluft (AL) verfügt, die den besagten Luftansaugtrakt (12") durchströmt, und besagte Kühlvorrichtungen (36, 37, 39) zwischen dem besagten Filter (38) und dem besagten Schalldämpfer (35) vorgesehen sind.

5. Kraftwerksblock nach Anspruch 4, **dadurch gekennzeichnet, dass** die besagten Kühlvorrichtungen (36, 37, 39) über eine Nebeleinspritzanlage (39) zur Vernebelung verfügt.

6. Kraftwerksblock nach Anspruch 4, **dadurch gekennzeichnet, dass** die besagten Kühlvorrichtungen (36, 37, 39) einen Verdampfungskühler (37) umfassen, der vorzugsweise über eine Tröpfchenauffangvorrichtung (36) verfügt, die dem besagten Verdampfungskühler (37) nachgeschaltet ist.

7. Kraftwerksblock nach Anspruch 2, **dadurch gekennzeichnet, dass** der besagte Luftansaugtrakt (12', 12") der besagten Gasturbine (11', 11") einen Schalldämpfer (35) vorsieht, der dem besagten Filter (38) nachgeschaltet ist, wobei der besagte Luftansaugtrakt (12', 12") der besagten Gasturbine (11' 11") ferner Kühlvorrichtungen (36, 37, 39) für die Kühlung der Ansaugluft (AL) vorsieht, welche den besagten Luftansaugtrakt (12', 12") durchströmt, und diese Kühlvorrichtungen (36, 37, 39) sind zwischen dem besagten Filter (38) und dem besagten Schalldämpfer (35) angeordnet und der besagte Lufteinlasswärmetauscher (30a,c) ist den besagten Kühleinrichtungen (36, 37, 39) nachgeschaltet.

8. Kraftwerksblock nach Anspruch 7, **dadurch gekennzeichnet, dass** die besagten Kühlvorrichtungen (36, 37, 39) über eine Nebeleinspritzanlage (39) zur Vernebelung verfügt.

9. Kraftwerksblock nach Anspruch 7, **dadurch gekennzeichnet, dass** die besagten Kühlvorrichtungen (36, 37, 39) einen Verdampfungskühler (37) umfassen, der vorzugsweise über eine Tröpfchenauffangvorrichtung (36) verfügt, die dem besagten Verdampfungskühler (37) nachgeschaltet ist.

10. Kraftwerksblock nach Anspruch 9, **dadurch gekennzeichnet, dass** ein erstes Ventil (V3) in einer Speiseleitung (25b) des besagten Stromerzeugerkühlers (21) im besagten Lufteinlasswärmetauscher (30, 30a-c) angeordnet ist, verbunden mit einer ersten Speiseleitung (32) zur besagten Speiseleitung (25b) des besagten Stromerzeugerkühlers (21), vorgeschaltet zum besagten ersten Ventil (V3) und mit einer ersten Rücklaufleitung (31) zur besagten Speiseleitung (25b) des besagten Stromerzeugerkühlers (21) versehen, nachgeschaltet zum besagten ersten Ventil (V3), und dieses zweite und dritte Ventil (V1, V2) sind in der besagten ersten Speiseleitung (32) und ersten Rücklaufleitung (31) angeordnet.

11. Kraftwerksblock nach Anspruch 10, **dadurch gekennzeichnet, dass** der besagte Stromerzeugerkühler (21) im besagten Lufteinlasswärmetauscher (30, 30a-c) verbunden ist mit einer zweiten Speiseleitung (33) zu einer gemeinsamen Rückleitung (26) des besagten Stromerzeugerkühlers (21) und des besagten Schmierölkühlers (23), sowie ferner verbunden ist mit einer zweiten Rücklaufleitung (34) einer gemeinsamen Speiseleitung (25) des besagten Stromerzeugerkühlers (21) und des besagten Schmierölkühlers (23), und ein viertes und fünftes Ventil (V4, V5) in der besagten zweiten Speiseleitung (33) und zweiten Rücklaufleitung (34) angeordnet sind.

12. Kraftwerksblock nach Anspruch 11, **dadurch gekennzeichnet, dass** ein sechstes Ventil (V6) in der besagten gemeinsamen Rücklaufleitung (26) oder gemeinsamen Speiseleitung (25) zwischen dem besagten Lufteinlasswärmetauscher (30, 30a-c) und der besagten Kühlwasser-Kühleinheit (22) angeordnet ist.

13. Verfahren zum Betrieb eines Kraftwerksblocks nach Anspruch 1, **dadurch gekennzeichnet, dass** Wärme aus dem besagten Stromerzeuger-Kühlsystem (20, 20a) zur angesaugten Luft (AL) übertragen wird, die den besagten Ansaugtrakt (12, 12', 12") der besagten Gasturbine (11, 11', 11") durchströmt, unter Einsatz des besagten Lufteinlasswärmetauscher s (30, 30a-c).

14. Verfahren nach Anspruch 13, **dadurch gekennzeichnet, dass** es sich bei mindestens einer Kühlanlage um einen ein Stromerzeugerkühler (21) handelt, wobei kaltes Wasser den besagten Stromerzeugerkühler (21) durchströmt und das Wasser weiter durch Durchströmen des besagten Lufteinlasswärmetauschers (30, 30a-c) im besagten Ansaugtrakt (12, 12', 12") der besagten Gasturbine (11, 11', 11") abgekühlt wird, wodurch ein zusätzliches Kühlbedarf mit einer höheren Leistung der besagten Gasturbine (11, 11', 11") auftritt, wenn die Kühlluftzufuhr beigeschaltet wird.

15. Verfahren nach Anspruch 13, **dadurch gekennzeichnet, dass** der besagte Lufteinlasswärmetauscher (30, 30a-c) bei niedriger Umgebungstemperatur eingesetzt wird, um einen effizienten Einfrierschutz zu bieten.

16. Verfahren nach Anspruch 13, **dadurch gekennzeichnet, dass** der besagte Lufteinlasswärmetauscher (30, 30a-c) die angesaugte Luft vorwärmt, um die Stickoxid-Emissionen der besagten Gasturbine (11, 11', 11") zu regeln.

## Revendications

1. Unité de génération de puissance (10), comprenant une turbine à gaz (11, 11', 11") avec une section d'admission d'air (12, 12', 12"), un compresseur (13), au moins une chambre de combustion (14, 16) et au moins une turbine (15, 17), et comprenant en outre un générateur refroidi par gaz (18), entraîné par ladite turbine à gaz (11, 11', 11 ") et ayant un système de refroidissement de générateur (20, 20a) comprenant au moins un refroidisseur (21, 23) qui est adapté pour contenir de l'eau de refroidissement (CW) qui circule à l'intérieur, et qui élimine la chaleur dudit générateur, dans laquelle ledit système de refroidissement de générateur (20, 20a) est relié à un échangeur thermique d'admission d'air (30, 30a-c) prévu dans ladite section d'admission d'air (12, 12', 12") de ladite turbine à gaz (11, 11', 11") afin de transférer la chaleur de ladite eau de refroidissement (CW) qui circule dans ledit système de refroidissement de générateur (20, 20a) vers l'air qui circule dans ladite section d'admission d'air (12, 12', 12"), dans laquelle ledit système de refroidissement de générateur (20, 20a-d) comprend un refroidisseur de générateur (21) et un refroidisseur d'huile de graissage (23), qui sont reliés à un refroidisseur d'eau de refroidissement (22), et dans laquelle des moyens de liaison (V1-V6, 31-34) sont prévus pour relier sélectivement ledit échangeur thermique d'admission d'air (30, 30a-c) en série audit refroidisseur de générateur (21) de sorte que l'eau froide qui circule vers le refroidisseur de générateur (21) soit également refroidie en la faisant passer par ledit échangeur thermique d'admission (30, 30a-c), ou en parallèle audit refroidisseur d'eau de refroidissement (22) afin d'empêcher le givrage de l'admission du compresseur et/ou des étages avant de ladite turbine à gaz (11, 11', 11 ").

2. Unité de génération de puissance selon la revendication 1, **caractérisé en ce que** ladite section d'admission d'air (12, 12', 12") de ladite turbine à gaz (11, 11', 11") comprend un filtre (38) à l'entrée de ladite section d'admission d'air (12, 12', 12"), et **en ce que** ledit échangeur thermique d'admission d'air (30, 30a-c) est prévu en aval dudit filtre (38).

3. Unité de génération de puissance selon la revendication 2, **caractérisé en ce que** ladite section d'admission d'air (12") de ladite turbine à gaz (11") comprend un silencieux (35) en aval dudit filtre (38), et **en ce que** ledit échangeur thermique d'admission d'air (30b) est prévu en aval dudit silencieux (35).

4. Unité de génération de puissance selon la revendication 3, **caractérisée en ce que** ladite section d'admission d'air (12") de ladite turbine à gaz (11") comprend un moyen (36, 37, 39) destiné à refroidir l'air d'admission (IA) qui circule dans ladite section d'admission d'air (12"), et **en ce que** ledit moyen de refroidissement (36, 37, 39) est prévu entre ledit filtre (38) et ledit silencieux (35).

5. Unité de génération de puissance selon la revendication 4, **caractérisée en ce que** ledit moyen de refroidissement (36, 37, 39) comprend un dispositif d'injection de gouttelettes (39) destiné à produire une brume.

6. Unité de génération de puissance selon la revendication 4, **caractérisée en ce que** ledit moyen de refroidissement (36, 37, 39) comprend un refroidisseur par évaporation (37), de préférence avec un intercepteur de gouttelettes (36) prévu en aval dudit refroidisseur par évaporation (37).

7. Unité de génération de puissance selon la revendication 2, **caractérisée en ce que** ladite section d'admission d'air (12', 12") de ladite turbine à gaz (11', 11") comprend un silencieux (35) en aval dudit filtre (38), **en ce que** ladite section d'admission d'air (12', 12") de ladite turbine à gaz (11', 11 ") comprend en outre un moyen (36, 37, 39) destiné à refroidir l'air d'admission (IA) qui circule dans ladite section d'admission d'air (12', 12"), ledit moyen de refroidissement (36, 37, 39) étant prévu entre ledit filtre (38) et ledit silencieux (35), et **en ce que** ledit échangeur thermique d'admission d'air (30a, c) est prévu en aval dudit moyen de refroidissement (36, 37, 39).

8. Unité de génération de puissance selon la revendication 7, **caractérisée en ce que** ledit moyen de refroidissement (36, 37, 39) comprend un dispositif d'injection de gouttelettes (39) destiné à produire une brume.

9. Unité de génération de puissance selon la revendication 7, **caractérisée en ce que** ledit moyen de refroidissement (36, 37, 39) comprend un refroidisseur par évaporation (37), de préférence avec un intercepteur de gouttelettes (36) prévu en aval dudit refroidisseur par évaporation (37).

10. Unité de génération de puissance selon la revendication 9, **caractérisée en ce qu'**une première valve (V3) est prévue dans une conduite d'alimentation (25b) dudit refroidisseur de générateur (21), et **en ce que** ledit échangeur thermique d'admission d'air (30, 30a-c) est relié, avec une première conduite d'alimentation (32), à ladite conduite d'alimentation (25b) dudit refroidisseur de générateur (21) en amont de ladite première valve (V3), et, avec une première conduite de retour (31), à ladite conduite d'alimentation (25b) dudit refroidisseur de générateur (21) en aval de ladite première valve (V3), et **en ce qu'**une seconde et une troisième valves (V1, V2) sont prévues dans ladite première conduite d'alimentation (32) et une première conduite de retour (31).

11. Unité de génération de puissance selon la revendication 10, **caractérisée en ce que** ledit échangeur thermique d'admission d'air (30, 30a-c) est relié, avec une seconde conduite d'alimentation (33), à une conduite de retour commune (26) dudit refroidisseur de générateur (21) et dudit refroidisseur d'huile de graissage (23), et, avec une seconde conduite de retour (34), à une conduite d'alimentation commune (25) dudit refroidisseur de générateur (21) et dudit refroidisseur d'huile de graissage (23), et **en ce qu'**une quatrième et une cinquième valves (V4, V5) sont prévues dans ladite seconde conduite d'alimentation (33) et la seconde conduite de retour (34).

12. Unité de génération de puissance selon la revendication 11, **caractérisée en ce qu'**une sixième valve (V6) est prévue dans ladite conduite de retour commune (26) ou ladite conduite d'alimentation commune (25) entre ledit échangeur thermique d'admission d'air (30, 30a-c) et ledit refroidisseur d'eau de refroidissement (22).

13. Procédé de fonctionnement d'une unité de génération de puissance selon la revendication 1, **caractérisé en ce que** la chaleur est transférée dudit système de refroidissement de générateur (20, 20a) vers l'air d'admission (IA) qui circule dans ladite section d'admission d'air (12, 12', 12") de ladite turbine à gaz (11, 11', 11") à l'aide dudit échangeur thermique d'admission d'air (30, 30a-c).

14. Procédé selon la revendication 13, **caractérisé en ce qu'**au moins un refroidisseur est un refroidisseur de générateur (21), et **en ce que** l'eau froide qui circule vers ledit refroidisseur de générateur (21) est également refroidie en la faisant passer par ledit échangeur thermique d'admission (30, 30a-c) prévu dans ladite section d'admission d'air (12, 12', 12") de ladite turbine à gaz (11, 11', 11") afin de synchroniser un besoin en refroidissement supplémentaire avec un rendement plus élevé de ladite turbine à gaz (11, 11', 11") lorsque le refroidissement de l'admission d'air est activé.

15. Procédé selon la revendication 13, **caractérisé en ce que** ledit échangeur thermique d'admission d'air (30, 30a-c) est utilisé à faible température ambiante afin d'agir comme un moyen antigivre efficace.

16. Procédé selon la revendication 13, **caractérisé en ce que** ledit échangeur thermique d'admission d'air (30, 30a-c) est utilisé pour préchauffer l'air d'admission afin de contrôler les émissions de NOx de ladite turbine à gaz (11, 11', 11 ").
